# EUROPÄISCHE PATENTSCHRIFT

(11) **EP 3 303 794 B1**
(45) Veröffentlichungstag und Bekanntmachung des Hinweises auf die Patenterteilung: **20.11.2024**
(21) Anmeldenummer: 16728259.9
(22) Anmeldetag: 30.05.2016
(51) Int. Cl.: F01P 11/16, F01P 3/18, F28F 9/02, F28F 27/02, F01P 7/16, F01P 7/14, F28D 1/053, F28F 1/12, F28D 21/00, F16K 1/22, F16K 3/02, F16K 31/04, F16K 31/06, F16K 31/54

(54) **VERFAHREN ZUM BETREIBEN EINES KÜHLSYSTEMS**
METHOD FOR OPERATING A COOLING SYSTEM
PROCÉDÉ PERMETTANT DE FAIRE FONCTIONNER UN SYSTÈME DE REFROIDISSEMENT

(30) Priorität: 01.06.2015 DE 102015108599
(43) Veröffentlichungstag der Anmeldung: 11.04.2018
(73) Patentinhaber: Volkswagen Aktiengesellschaft, 38440 Wolfsburg (DE)
(72) Erfinder: ROHR, Michael, 38446 Wolfsburg (DE)
(74) Vertreter: Bungartz, Florian
(86) Internationale Anmeldenummer: PCT/EP2016/062112
(87) Internationale Veröffentlichungsnummer: WO 2016/193194

(56) Entgegenhaltungen:
- EP-A1- 0 501 854
- DE-A1- 102005 017 974
- DE-A1- 102005 055 323
- DE-A1- 102006 040 989
- DE-A1- 102006 061 440
- DE-A1- 3 217 836
- US-A- 6 019 171

## Beschreibung

Die Erfindung betrifft ein Verfahren zum Betreiben eines Kühlsystems, insbesondere eines Kühlsystems eines Kraftfahrzeugs.

Kraftfahrzeuge weisen in der Regel mindestens ein Kühlsystem auf, in dem ein Kühlmittel mittels einer oder mehrerer Kühlmittelpumpen in mindestens einem Kühlkreis gepumpt wird und dabei Wärmeenergie von in den Kühlkreis integrierten Funktionskomponenten, wie beispielsweise einem Verbrennungsmotor, einem Ölkühler und/oder einem Ladeluftkühler, aufnimmt. Diese Wärmeenergie wird anschließend in einem (Umgebungs-)Wärmetauscher, dem sogenannten Hauptkühler, sowie zeitweise in einem Heizungswärmetauscher an die Umgebungsluft, im Fall des Heizungswärmetauschers an die zur Klimatisierung des Innenraums des Kraftfahrzeugs vorgesehene Umgebungsluft, abgegeben.

Bei den meisten Kraftfahrzeugen ist vorgesehen, während einer Warmlaufphase des Verbrennungsmotors den Hauptkühler nicht von dem Kühlmittel durchströmen zu lassen, um ein möglichst schnelles Aufwärmen des Kühlmittels und damit des Verbrennungsmotors und weiterer in den Kühlkreis integrierter Funktionskomponenten sowie gegebenenfalls ein möglichst schnelles Wirksamwerden der Innenraumheizung des Kraftfahrzeugs zu erreichen. Solange das Kühlmittel in diesem sogenannten kleinen Kühlkreis gefördert wird, wird eine kühlende Wirkung des Hauptkühlers für das Kühlmittel vermieden. Erreicht das Kühlmittel dagegen eine definierte Grenztemperatur, wird durch eine Betätigung eines Umschaltventils von dem kleinen auf einen sogenannten großen, den Hauptkühler integrierenden Kühlkreis umgeschaltet, so dass durch die kühlende Wirkung des Hauptkühlers eine Überhitzung des Kühlmittels und der durch dieses gekühlten Funktionskomponenten des Kühlsystems verhindert wird.

Während bei den meisten Kühlsystemen von Kraftfahrzeugen das Umschaltventil als separates Funktionselement extern in ein die weiteren Funktionskomponenten des Kühlsystems fluidleitend verbindendes Leitungssystem integriert ist, offenbart die DE 10 2006 040 989 A1 die Integration eines solchen Umschaltventils in einen Wärmetauscherkasten des Hauptkühlers.

Als problematisch beim Umschalten eines Kühlsystems von einem Betrieb in einem kleinen Kühlkreis auf einen Betrieb in einem großen Kühlkreis hat sich gezeigt, dass dabei bereits stark erhitztes Kühlmittel (mit einer Temperatur von beispielsweise ca. 100 °C) in relativ großer Menge in den Hauptkühler eingeleitet wird, der noch mit Kühlmittel befüllt ist, das im Wesentlichen Umgebungstemperatur aufweist. Bei vergleichsweise kalten Umgebungstemperaturen von insbesondere unter 0°C ergibt sich somit eine relativ große Temperaturdifferenz zwischen dem bereits in dem Hauptkühler vorhandenen Kühlmittel und dem infolge des Umschaltens des Umschaltventils in diesen einströmenden, zuvor durch den Betrieb in dem kleinen Kühlkreis aufgeheizten Kühlmittel. Diese Temperaturdifferenz führt insbesondere im Bereich der Kalt-Heiß-Front, die durch das Aufeinandertreffen der unterschiedlich temperierten Teilmengen des Kühlmittels ausgebildet wird, zu entsprechend stark ausgeprägten unterschiedlichen Wärmedehnungen der den Hauptkühler ausbildenden Elemente. Diese unterschiedlichen Wärmedehnungen führen wiederum zu erheblichen Materialspannungen, die in Kombination mit der Wechselbeanspruchung, die sich aus dem Aufheizen des Hauptkühlers im Betrieb des Kühlsystems in dem großen Kühlkreis einerseits und dem Abkühlen des Hauptkühlers auf Umgebungstemperatur im Nichtbetrieb der Brennkraftmaschine oder in einem Betrieb des Kühlsystems in dem kleinen Kühlkreis ergibt, zu einem relativ schnellen Materialversagen führen können.

Für Hauptkühler von Kühlsystemen von Kraftfahrzeugen sind sogenannte U-Strom-Kühler verbreitet, bei denen sowohl der Einlass als auch der Auslass für das Kühlmittel in einem ersten der Kühlerkästen ausgebildet sind, wobei dieser erste Kühlerkasten zwischen dem Einlass und dem Auslass über einen Trennsteg in zwei Teile unterteilt ist. Das Kühlmittel strömt ausgehend von dem den Einlass umfassenden Teil dieses ersten Kühlerkastens über die in diesen Teil mündenden Kühlerrohre in den zweiten der Kühlerkästen, wird in diesem zweiten Kühlerkasten umgelenkt und strömt über die weiteren Kühlerrohre in den den Auslass umfassenden Teil des ersten Kühlerkastens zurück. Bei solchen U-Strom-Kühlern ist insbesondere der den Trennsteg umfassende Bereich durch die beschriebene Thermowechselbeanspruchung belastet, weil dort die unterschiedlich temperierten Teilmengen des Kühlmittels, lediglich separiert durch den Trennsteg, aufeinandertreffen, ohne dass es dabei zu einer die Kühlmitteltemperatur absenkenden Vermischung kommen kann.

Bekannte Maßnahmen, die eine ausreichende Lebensdauer eines Hauptkühlers gewährleisten sollen, zielen entweder auf eine lokale Steigerung der Belastbarkeit durch konstruktive oder werkstofftechnische Maßnahmen oder eine Senkung der Belastung durch eine Verringerung der Temperatur des Kühlmittels beim Umschalten von dem kleinen auf den großen Kühlkreis ab. Die erstgenannten Maßnahmen sind jedoch mit nicht unerheblichen Zusatzkosten verbunden, während eine Senkung der Kühlmitteltemperatur beim Umschalten zu einem verzögerten Erreichen des Betriebstemperaturbereichs für die Brennkraftmaschine und damit zu einer Verschlechterung des Wirkungsgrads und/oder der Abgasemissionen in der Warmlaufphase der Brennkraftmaschine führen.

Die DE 10 2006 061 440 A1 beschreibt einen Wärmetauscher, bei dem in zumindest einem der Wärmetauscherkästen eine Trennwand angeordnet ist, die zur Anpassung der Kühlleistung des Wärmetauschers beweglich ausgebildet ist. Dabei kann die Trennwand sowohl in Längsrichtung des dazugehörigen Wärmetauscherkastens als auch quer dazu ausgerichtet sein.

Aus der DE 10 2013 220 039 A1 ist ein als Kühlmittelkühler für ein Kraftfahrzeug dienender Wärmetauscher bekannt, der über mindestens zwei Fluideinlässe und zwei Fluidauslässe in zwei Kühlmittelkreisläufe integrierbar ist.

Die EP 0 501 854 A1 offenbart einen Kühler für ein Kühlsystem eines Kraftfahrzeugs, der in Form eines U-Strom-Kühlers ausgebildet sein kann und demnach einen Wärmetauscherkasten umfasst, in den ein Einlass und ein Auslass integriert sind, wobei der Wärmetauscherkasten zwischen dem Einlass und dem Auslass mittels einer Trennwand unterteilt ist. In der Trennwand ist eine Durchgangsöffnung vorgesehen. Der Kühler umfasst weiterhin eine Verschlussvorrichtung mit einem Aktor, durch den zwei über eine Schubstange verbundene Verschlusselemente bewegbar sind. Das erste Verschlusselement dient dazu, eine Mündung des Einlasses mehr oder weniger zu verschließen beziehungsweise freizugeben. Das zweite Verschlusselement dient dazu, die Durchgangsöffnung in der Trennwand mehr oder weniger zu verschließen beziehungsweise freizugeben. Ein Verstellen des Aktors und damit der Verschlusselemente erfolgt in Abhängigkeit von einer Temperatur des Kühlmittels, wobei dadurch die Kühlleistung des Kühlers gesteuert an die Kühlleistungsanforderung angepasst werden soll.

Die US 6,019,171 A1 beschreibt einen U-Strom-Kühler mit einem Wärmetauscherkasten, der mittels einer Verschlussvorrichtung in einem Abschnitt zwischen einem Einlass und einem Auslass unterteilbar ist. Die Verschlussvorrichtung umfasst eine Trennwand mit einer Durchgangsöffnung, ein Verschlusselement sowie ein Dehnstoffelement. Solange das Kühlmittel in dem Wärmetauscherkasten relativ kalt ist, ist das Verschlusselement mittels des Dehnstoffelements in einer die Durchgangsöffnung teilweise freigebenden Stellung gehalten, wodurch ein Entlüften des Kühlers erreicht werden soll. Ist dagegen die Temperatur des Kühlmittels relativ hoch, ist das Verschlusselement mittels des Dehnstoffelements in einer die Durchgangsöffnung vollständig verschließenden Stellung gehalten, wodurch ein Überströmen von Kühlmittel durch die Durchgangsöffnung verhindert wird.

Die DE 10 2006 040 989 A1 offenbart zwei Varianten von U-Strom-Kühlern mit Durchgangsöffnungen aufweisenden Trennwänden, die mittels eines Umschaltventils temperaturabhängig verschlossen oder freigegeben werden können. Dadurch kann eine Durchströmung von Wärmetauscherblöcken der Kühler bedarfsgerecht bis hin zu einer vollständigen Unterbrechung der Durchströmung angepasst werden.

Die DE 10 2005 055 323 A1 offenbart ein Verfahren zum Betreiben einer Kühleinrichtung in einem Kühlkreislauf eines Fahrzeugs zum Kühlen einer Verbrennungskraftmaschine, mit einem eintrittsseitigen Sammelkasten und einem austrittseitigen Sammelkasten sowie einem zwischen den Sammelkästen angeordneten Kühlbereich, der in einen Hauptbereich und Niedertemperaturbereich unterteilt ist. Dabei ist wenigstens in dem eintrittsseitigen Sammelkasten ein Ventil vorgesehen, das den Niedertemperaturbereich zum Hauptbereich betriebsparameterabhängig öffnet oder schließt.

Ausgehend von diesem Stand der Technik lag der Erfindung die Aufgabe zugrunde, auf vorteilhafte Weise eine Verringerung der Lebensdauer eines Wärmetauschers in einem Kühlsystem eines Kraftfahrzeugs infolge der beschriebenen Thermowechselbeanspruchung zu vermeiden.

Diese Aufgabe wird mittels eines Verfahrens zum Betreiben eines Kühlsystems gemäß dem

Patentanspruch 1 gelöst. Vorteilhafte Ausführungsformen des erfindungsgemäßen Verfahrens sind Gegenstände der weiteren Patentansprüche und ergeben sich aus der nachfolgenden Beschreibung der Erfindung.

Der Erfindung liegt der Gedanke zu Grunde, dass eine Beeinträchtigung der Lebensdauer eines Wärmetauschers durch die beschriebene Thermowechselbeanspruchung dadurch verringert werden kann, dass der Ort der höchsten Belastung infolge der Thermowechselbeanspruchung regelmäßig verlagert wird, wodurch die Belastungen auf verschiedene Abschnitte des Wärmetauschers verteilt werden, was zu einer entsprechenden Vervielfachung der möglichen Lastwechselzahl für die Thermowechselbeanspruchung führen kann. Dabei wurde erkannt, dass eine solche Verlagerung des am stärksten durch die Thermowechselbeanspruchung belasteten Bereichs um den Trennsteg in dem den Einlass und den Auslass umfassenden Wärmetauscherkasten bei einem U-Strom-Kühler dadurch erreicht werden kann, dass in den Trennsteg eine mehr oder weniger große Durchgangsöffnung eingebracht ist, über die ein Teil des über den Einlass in den entsprechenden Wärmetauscherkasten einströmenden heißen Kühlmittels unter Umgehung der Wärmetauscherrohre in den den Auslass umfassenden Teil dieses Wärmetauscherkastens strömen kann, wodurch zum einen eine Verlagerung der Kalt-Heiß-Front und zum anderen auch eine lokal verfrüht einsetzende Vermischung zwischen den unterschiedlich temperierten Teilmengen des Kühlmittels realisiert werden kann. Dadurch kann der bei konventionellen U-Strom-Kühlern am stärksten durch die Thermowechselbeanspruchung belastete Bereich um den (vollständig geschlossenen) Trennsteg entlastet und der Ort der höchsten Beanspruchung in Richtung des Auslasses verschoben werden. Wird folglich die Größe der Öffnung in dem Trennsteg regelmäßig verändert, verlagert sich auch in entsprechendem Maße regelmäßig der Ort der höchsten Belastung infolge der Thermowechselbeanspruchung, was insgesamt dazu führt, dass die Lastwechselzahl der Thermowechselbeanspruchung, denen der Wärmetauscher vor einem voraussichtlichen Materialversagen ausgesetzt werden kann, vervielfacht werden kann.

Die Erfindung betrifft demnach ein Verfahren zum Betreiben eines Kühlsystems, das einen einen Wärmetauscher integrierenden großen Kühlkreis und einen den Wärmetauscher ausschließenden kleinen Kühlkreis ausbildet, wobei der Wärmetauscher eine Mehrzahl von Wärmetauscherrohren, die für eine Durchströmung mittels eines Kühlmittels (insbesondere eine Kühlflüssigkeit) und für eine Umströmung mittels eines Kühlmediums (insbesondere ein Gas und vorzugsweise Umgebungsluft) vorgesehen sind, und an die Wärmetauscherrohre an deren Enden angeschlossene Wärmetauscherkästen umfasst, wobei für eine U-förmige Strömungsführung des Kühlmediums zumindest ein erster der Wärmetauscherkästen eine Einlassöffnung des Wärmetauschers und eine Auslassöffnung des Wärmetauschers aufweist, und dieser erste Wärmetauscherkasten zwischen der Einlassöffnung und der Auslassöffnung mittels eines Verschlusselements variabel verschließbar ist, und wobei zum Umschalten von einem Betrieb des Kühlsystems in dem kleinen Kühlkreis auf einen Betrieb in dem großen Kühlkreis ein außerhalb des Wärmetauschers vorgesehenes Umschaltventil betätigt wird.

Erfindungsgemäß ist vorgesehen, dass für zumindest zwei aufeinanderfolgende Umschaltungen von dem kleinen Kühlkreis auf den großen Kühlkreis der Grad des Verschlusses des ersten Wärmetauscherkastens durch Einstellen verschiedener Stellungen des Verschlusselements verändert wird, indem für eine erste Umschaltung von dem kleinen Kühlkreis auf den großen Kühlkreis der Grad des Verschlusses des ersten Wärmetauscherkastens durch Einstellen einer ersten Stellung des Verschlusselements auf einen ersten Wert eingestellt wird und für eine auf die erste Umschaltung folgende zweite Umschaltung von dem kleinen Kühlkreis auf den großen Kühlkreis der Grad des Verschlusses des ersten Wärmetauscherkastens durch Einstellen einer zweiten Stellung des Verschlusselements, die sich von der ersten Stellung unterscheidet, auf einen zweiten Wert, der sich von dem ersten Wert unterscheidet, eingestellt wird.

Um während eines andauernden Betriebs des Kühlsystems in dem großen Kühlkreis eine Verringerung der Wärmetauschleistung des Wärmetauschers infolge einer die Wärmetauscherrohre umgehenden und über einen von dem Verschlusselement freigegebenen Strömungspfad geführte Kurzschlussströmung zu vermeiden, kann in einer bevorzugten Ausführungsform des erfindungsgemäßen Verfahrens vorgesehen sein, dass nach einer definierten Phase eines Betriebs des Kühlsystems in dem großen Kühlkreis der erste Wärmetauscherkasten mittels des Verschlusselements weitestgehend verschlossen wird. Ein vorgesehenes Freigeben eines Kurzschlussströmungspfads infolge einer entsprechenden Öffnungsstellung des Verschlusselements wäre dann somit temporär für eine definierte Phase nach dem Umschalten des Umschaltventils (gegebenenfalls auch vorab während des Betriebs des Kühlsystems in dem kleinen Kühlkreis) vorgesehen, so dass nach dieser definierten Phase des Betriebs des Kühlsystems in dem großen Kühlkreis sichergestellt werden kann, dass das gesamte dabei geförderte Kühlmittel über die Wärmetauscherrohre geführt wird, so dass ein Wärmeübergang zwischen dem Kühlmittel und dem die Wärmetauscherrohre umströmenden Kühlmedium gewährleistet ist.

In einer bevorzugten Ausgestaltung des im Rahmen des erfindungsgemäßen Verfahrens genutzten Wärmetauschers kann vorgesehen sein, dass das Verschlusselement in mehr als zwei Stellungen stellbar ist. Dadurch kann eine weitere Erhöhung der von der Thermowechselbeanspruchung beeinflussten Lebensdauer für den Wärmetauscher erreicht werden, da mit jeder Stellung des Verschlusselements ein unterschiedlich großer Kurzschlussströmungspfad realisiert wird, der mit einer entsprechend veränderten Positionierung der von den unterschiedlich temperierten Teilmengen des Kühlmittels ausgebildeten Kalt-Heiß-Front und damit des Orts der höchsten Belastung infolge der Thermowechselbeanspruchung verbunden ist.

Im Rahmen des erfindungsgemäßen Verfahrens kann vorgesehen sein, dass der Grad des Verschlusses des ersten Wärmetauscherkastens für jedes Umschalten von dem kleinen Kühlkreis auf den großen Kühlkreis verändert wird. Beispielsweise kann bei einem ersten Umschalten des Umschaltventils von dem kleinen auf den großen Kühlkreis das Verschlusselement in einer den ersten Wärmetauscherkasten vollständig verschließenden Stellung positioniert werden, während für ein darauffolgendes Umschalten des Umschaltventils von dem kleinen auf den großen Kühlkreis das Verschlusselement in eine einen vergleichsweise kleinen Kurzschlussströmungspfad freigebende Stellung positioniert wird. In einem sich daran anschließenden weiteren Umschalten des Umschaltventils von dem kleinen auf den großen Kühlkreis kann das Verschlusselement dann in eine einen etwas größeren Kurzschlussströmungspfad freigebende Stellung bewegt werden. Dies kann für alle Stellungen, in die das Verschlusselement positionierbar ist, fortgesetzt werden, bevor in einem sich daran anschließenden erneuten Umschalten des Umschaltventils von dem kleinen auf den großen Kühlkreis der erste Wärmetauscherkasten wiederum weitestgehend beziehungsweise möglichst vollständig von dem Verschlusselement verschlossen wird, wodurch ein neuer Zyklus für die unterschiedlichen Stellungen des Verschlusselements, die nacheinander für ein Umschalten des Umschaltventils von dem kleinen auf den großen Kühlkreis vorgesehen werden, gestartet wird.

Weiterhin kann vorgesehen sein, dass der Grad des Verschlusses des ersten Wärmetauscherkastens jeweils nach einer definierten Anzahl an Umschaltungen von dem kleinen Kühlkreis auf den großen Kühlkreis verändert wird. Somit kann beispielsweise vorgesehen sein, dass für die ersten beispielsweise einhundert Umschaltungen des Umschaltventils von dem kleinen auf den großen Kühlkreis das Verschlusselement in einer den ersten Wärmetauscherkasten weitestgehend und insbesondere möglichst vollständig verschließenden Stellung gehalten wird, während für die darauffolgenden jeweils einhundert Umschaltungen von dem kleinen auf den großen Kühlkreis das Verschlusselement in andere Stellungen, beispielsweise in zunehmend größere Kurzschlussströmungspfade freigebende Stellungen, bewegt wird.

Ebenfalls kann vorgesehen sein, dass der Grad des Verschlusses des ersten Wärmetauscherkastens jeweils nach einer definierten Betriebsdauer des Kühlsystems verändert wird. Dabei kann die Betriebsdauer des Kühlsystems beispielsweise anhand der Betriebsdauer einer Kühlmittelpumpe bestimmt werden. Ebenfalls besteht die Möglichkeit, die Betriebsdauer des Kühlsystems anhand der Betriebsdauer einer das Kühlsystem integrierenden Brennkraftmaschine und/oder eines das Kühlsystem integrierenden Kraftfahrzeugs oder auch anhand der Fahrleistung (insbesondere gefahrene Kilometer) eines solchen Kraftfahrzeugs zu bestimmen.

Unabhängig von dem konkreten Vorgehen beim Einstellen der verschiedenen Stellungen des Verschlusselements für ein Umschalten des Umschaltventils von dem kleinen auf den großen Kühlkreis kann vorgesehen sein, dass die dabei vorgesehenen verschiedenen Stellungen des Verschlusselements gleich häufig eingestellt werden, wodurch eine entsprechend gleichmäßige Verteilung der durch die Thermowechselbeanspruchung begründeten Belastungen auf die durch die teilweise Ausbildung eines mehr oder weniger großen Kurzschlussströmungspfads mittels des Verschlusselements erfassbaren Abschnitte des Wärmetauschers erreicht werden kann. Gegebenenfalls kann es jedoch auch vorteilhaft sein, die verschiedenen Stellungen des Verschlusselements unterschiedlich häufig einzustellen, um beispielsweise solche Abschnitte, die aus konstruktiven oder werkstofftechnischen Gründen weniger hoch beziehungsweise weniger häufig belastbar sind, seltener durch eine entsprechende Positionierung des Verschlusselements (primär) zu belasten. Insbesondere kann es sinnvoll sein, die den ersten Wärmetauscherkasten weitestgehend oder insbesondere möglichst vollständig verschließende Stellung nur vergleichsweise selten für ein Umschalten des Umschaltventils von dem kleinen auf den großen Kühlkreis vorzusehen, weil bei dieser Stellung eine hinsichtlich der Thermowechselbeanspruchung positive Wirkung durch eine verfrühte Vermischung zwischen heißem und kaltem Kühlmittel nicht gegeben ist. Somit kann besonders bevorzugt auch vorgesehen sein, dass die Anzahl der Umschaltungen des Umschaltventils von dem kleinen auf den großen Kühlkreis, die für die einzelnen Stellungen des Verschlusselements vorgesehen sind, tendenziell größer werden können, je größer der von dem Verschlusselement freigegebene Kurzschlussströmungspfad ist.

In einer weiterhin bevorzugten Ausführungsform des erfindungsgemäßen Verfahrens kann vorgesehen sein, dass der Grad des Verschlusses des ersten Wärmetauscherkastens durch Einstellen verschiedener Stellungen des Verschlusselements nur verändert wird, wenn die Temperatur des in dem Wärmetauscher bereits befindlichen Kühlmediums unterhalb eines Grenzwerts (beispielsweise -10°C) und/oder die Temperatur und/oder der Volumenstrom des in den ersten Wärmetauscherkastens einströmenden Kühlmittels oberhalb eines Grenzwerts liegt. Demnach kann vorgesehen sein, lediglich solche Umschaltungen im Betrieb des Kühlsystems von dem kleinen auf den großen Kühlkreis zu berücksichtigen, die infolge einer vergleichsweise hohen Temperaturdifferenz zwischen dem in den Wärmetauscher einströmenden Kühlmittel und der Temperatur des sich beim Umschalten des Umschaltventils bereits in dem Wärmetauscher befindlichen Kühlmittels (die im Wesentlichen der Temperatur des Kühlmediums entsprechen kann) zu einer tatsächlich relevanten Thermowechselbeanspruchung führen. Gleiches kann für eine Berücksichtigung eines vergleichsweise hohen Volumenstroms des in den ersten Wärmetauscherkastens einströmenden Kühlmittels (und damit der mit diesem eingebrachten Wärmeenergie) gelten.

Weiterhin kann dann noch vorgesehen sein, dass der erste Wärmetauscherkasten mittels des Verschlusselements weitestgehend und insbesondere möglichst vollständig verschlossen gehalten wird, wenn die Temperatur des bereits in dem Wärmetauscher enthaltenen Kühlmittels oberhalb des entsprechenden Grenzwerts und/oder die Temperatur und/oder der Volumenstrom des in den ersten Wärmetauscherkastens einströmenden Kühlmittels unterhalb des entsprechenden Grenzwerts liegt. Somit wird dann, wenn keine relevante Thermowechselbeanspruchung zu erwarten ist, eine Kurzschlussströmung des heißen Kühlmittels durch den ersten Wärmetauscherkasten und daraus folgend eine verringerte Wärmetauschleistung des Wärmetauschers vermieden.

Bei dem Wärmetauscher, der im Rahmen eines erfindungsgemäßen Verfahrens verwendet wird, kann es sich insbesondere um einen Hauptkühler eines Kühlsystems für eine Brennkraftmaschine handeln. Als "Hauptkühler" wird dabei ein (Umgebungs-)Wärmetauscher verstanden, der primär oder ausschließlich dafür vorgesehen ist, Wärmeenergie des in dem großen Kühlkreis zirkulierenden Kühlmittels, die das Kühlmittel bei der Durchströmung einer oder mehrerer der weiteren in den oder die Kühlkreise integrierten Funktionskomponenten, insbesondere einem Verbrennungsmotor der Brennkraftmaschine, aufgenommen hat, an Umgebungsluft zu übertragen.

Die Brennkraftmaschine kann insbesondere zur Erzeugung einer Fahrantriebsleistung für ein Kraftfahrzeug, insbesondere ein radbasiertes Kraftfahrzeug (vorzugsweise PKW oder LKW), vorgesehen sein.

Die unbestimmten Artikel ("ein", "eine", "einer" und "eines"), insbesondere in den

Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand von in den Zeichnungen dargestellten Ausführungsbeispielen näher erläutert. In den Zeichnungen zeigt:
- Fig. 1:: ein Kraftfahrzeug mit einem Kühlsystem, das im Rahmen eines erfindungsgemäßen Verfahrens betreibbar ist;
- Fig. 2:: einen zur Verwendung im Rahmen eines erfindungsgemäßen Verfahrens geeigneten Wärmetauscher mit dem Verschlusselement in einer ersten Stellung;
- Fig. 3:: einen Horizontalschnitt durch den ersten Wärmetauscherkasten des Wärmetauschers gemäß der Fig. 2 ;
- Fig. 4:: einen Vertikalschnitt durch einen Abschnitt des Wärmetauschers gemäß der Fig. 2;
- Fig. 5:: den Wärmetauscher gemäß der Fig. 2 mit dem Verschlusselement in einer zweiten Stellung;
- Fig. 6:: einen Horizontalschnitt durch den ersten Wärmetauscherkasten des Wärmetauschers gemäß der Fig. 5;
- Fig. 7:: einen Vertikalschnitt durch einen Abschnitt des Wärmetauschers gemäß der Fig. 5;
- Fig. 8:: den Wärmetauscher gemäß den Fig. 2 und 5 mit dem Verschlusselement in einer dritten Stellung;
- Fig. 9:: einen Horizontalschnitt durch den ersten Wärmetauscherkasten des Wärmetauschers gemäß der Fig. 8;
- Fig. 10:: schematisch eine erste Ausgestaltung eines Aktors für ein Verschlusselement eines im Rahmen eines erfindungsgemäßen Verfahrens verwendeten Wärmetauschers;
- Fig. 11:: schematisch eine zweite Ausgestaltung eines Aktors für ein Verschlusselement eines im Rahmen eines erfindungsgemäßen Verfahrens verwendeten Wärmetauschers;
- Fig. 12:: schematisch eine dritte Ausgestaltung eines Aktors für ein Verschlusselement eines im Rahmen eines erfindungsgemäßen Verfahrens verwendeten Wärmetauschers;
- Fig. 13:: schematisch eine weitere Ausgestaltung eines Verschlusselements für einen im Rahmen eines erfindungsgemäßen Verfahrens verwendeten Wärmetauscher;
- Fig. 14:: schematisch eine weitere Ausgestaltung eines Verschlusselements für einen im Rahmen eines erfindungsgemäßen Verfahrens verwendeten Wärmetauscher;
- Fig. 15:: schematisch eine erste Variante eines Verschlusselements gemäß der Fig. 14 in einer Ansicht gemäß der Blickrichtung A in der Fig. 14; und
- Fig. 16:: schematisch eine zweite Variante eines Verschlusselements gemäß der Fig. 14 in einer Ansicht gemäß der Blickrichtung A in der Fig. 14.

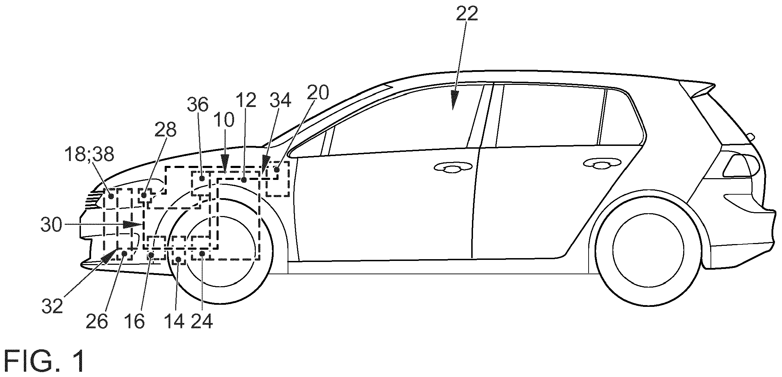

Die Fig. 1 zeigt ein erfindungsgemäßes Kraftfahrzeug mit einer Brennkraftmaschine 10. Diese umfasst einen Verbrennungsmotor 12, der im Betrieb die Antriebsleistung für den Fahrbetrieb des Kraftfahrzeugs zur Verfügung stellt. Das Kraftfahrzeug umfasst weiterhin ein Kühlsystem, das der Kühlung einzelner Funktionskomponenten des Antriebsstrangs, unter anderem des Verbrennungsmotors 12, eines Motorölkühlers 14 und eines Getriebeölkühlers 16, dient. In dem Kühlsystem zirkuliert ein Kühlmittel, das Wärmeenergie von den zu kühlenden Funktionskomponenten aufnimmt. Die Wärmeenergie wird dann in einem Wärmetauscher, dem sogenannten Hauptkühler 18, sowie zumindest zeitweise in einem Heizungswärmetauscher 20 durch Wärmeübergang auf Umgebungsluft wieder abgekühlt, so dass diese wieder zu den zu kühlenden Funktionskomponenten rezirkuliert werden kann. In dem Hauptkühler 18 erfolgt der Wärmeübergang von dem Kühlmittel auf die Umgebungsluft ausschließlich mit dem Ziel der Kühlung des Kühlmittels. Der Wärmeübergang in dem Heizungswärmetauscher 20 erfolgt dagegen primär mit dem Ziel der Temperierung von Umgebungsluft, die anschließend einem Innenraum 22 des Kraftfahrzeugs zugeführt werden soll. Der Transport des Kühlmittels in dem Kühlsystem erfolgt mittels einer Kühlmittelpumpe 24, die vorzugsweise in Form einer Strömungspumpe (insbesondere Radialpumpe) ausgebildet und direkt von dem Verbrennungsmotor 12 oder auch separat von einem dazugehörigen Elektromotor (nicht dargestellt) angetrieben sein kann.

Im Fahrbetrieb des Kraftfahrzeugs mit ausreichend hoher Fahrgeschwindigkeit kann die Anströmung des Kraftfahrzeugs durch die Umgebungsluft ausreichend für die mittels des Kühlsystems zu erbringende Kühlleistung sein. Im Stillstand des Kraftfahrzeugs mit laufendem Verbrennungsmotor 12 sowie in einem Fahrbetrieb mit einem Betrieb des Verbrennungsmotors 12 mit relativ hoher Last und relativ geringer Fahrgeschwindigkeit, wie beispielsweise bei Bergauffahrt und/oder in einem Hängerbetrieb, kann die Anströmung des Kraftfahrzeugs durch die Umgebungsluft dagegen nicht ausreichend sein. Insbesondere für diesen Fall ist noch ein Gebläse 26 dem Hauptkühler 18 nachgeschaltet, das dann in Betrieb genommen wird, um eine ausreichende Durchströmung des Hauptkühlers 18 zu gewährleisten.

Das Kühlsystem bildet einen großen Kühlkreis aus, der sämtliche der vorgenannten, von dem Kühlmittel durchströmbaren Funktionskomponenten und somit auch den Hauptkühler 18 integriert. Es besteht jedoch auch die Möglichkeit, das Kühlsystem in einem kleinen Kühlkreis zu betreiben, indem ein Umschaltventil 28 derart geschaltet wird, dass das Kühlmittel unter Umgehung des Hauptkühlers 18 über eine Bypassleitung 30 geführt wird, die stromab eines Auslasses 32 des Hauptkühlers 18 in denjenigen Abschnitt des Kühlsystems mündet, der sowohl in den kleinen als auch in den großen Kühlkreis integriert ist. Die Ansteuerung des Umschaltventils 28 kann beispielsweise in Abhängigkeit von einer Temperatur des Kühlmittels, die beispielsweise im Bereich eines Auslasses 34 von in den Verbrennungsmotor integrierten Kühlmittelkanälen gemessen wird, mittels einer Motorsteuerung 36 erfolgen.

Vorgesehen ist, in einer Warmlaufphase der Brennkraftmaschine, wenn eine Temperatur des Kühlmittels noch nicht einen definierten Betriebstemperaturbereich erreicht hat, das Kühlsystem in dem kleinen Kühlkreis zu betreiben, um zu verhindern, dass das Kühlmittel in dem Hauptkühler 18 gekühlt wird, wodurch ein Erreichen des Betriebstemperaturbereichs verzögert würde. Hat die Temperatur des Kühlmittels dagegen den Betriebstemperaturbereich erreicht, wird das Umschaltventil 28 mittels der Motorsteuerung 36 umgeschaltet, um das Kühlsystem in dem großen Kühlkreis zu betreiben. Die Kühlung des Kühlmittels in dem Hauptkühler 18 bewirkt dann eine Übertragung der von den Funktionskomponenten dem Kühlmittel weiter zugeführten Wärmeenergie auf Umgebungsluft und verhindert dadurch eine Überhitzung des Kühlmittels und der Funktionskomponenten.

Das Umschalten des Umschaltventils 28 führt dazu, dass schlagartig Kühlmittel mit einer relativ hohen Temperatur von beispielsweise ca. 100°C in den Hauptkühler 18 eintritt, in dem noch Kühlmittel enthalten ist, dessen Temperatur deutlich geringer ist und insbesondere der Umgebungstemperatur im Wesentlichen entsprechen kann. Beträgt die Umgebungstemperatur beispielsweise deutlich unter 0°C ergibt sich somit eine erhebliche Differenz zwischen der Temperatur des bereits in dem Hauptkühler 18 enthaltenen Kühlmittels und dem infolge des Umschalten des Umschaltventils 28 in den Hauptkühler 18 einströmenden Kühlmittels, die zu erheblichen Materialspannungen infolge lokal unterschiedlichen Dehnungsverhaltens führen kann. Dies führt in Verbindung mit dem regelmäßigen Aufheizen und Abkühlen des Kühlmittels im Rahmen eines Betriebs oder Nichtbetriebs des Kraftfahrzeugs zu einer Thermowechselbeanspruchung, die nach einer relativ genau definierbaren Lastwechselzahl zu einer hohen Wahrscheinlichkeit eines Materialversagens führen kann.

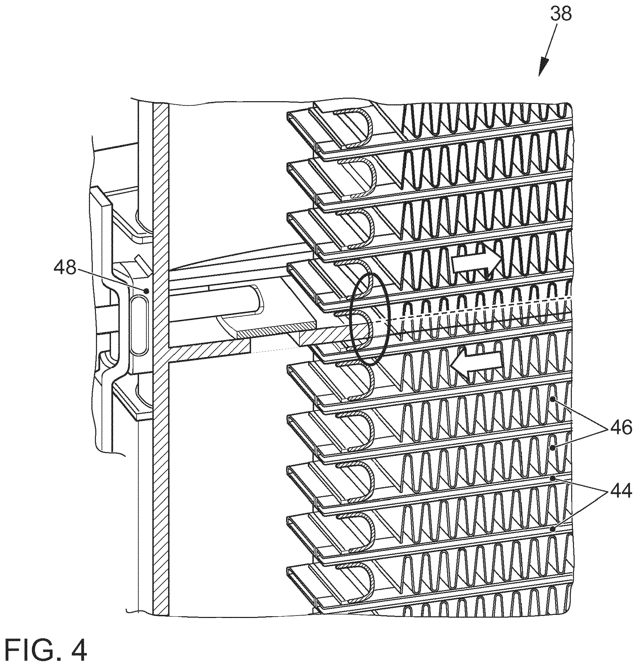

In der Fig. 4 ist der Bereich der höchsten Belastung infolge dieser Thermowechselbeanspruchung für einen im Rahmen eines erfindungsgemäßen Verfahrens verwendeten Wärmetauschers 38, bei dem das dazugehörige Verschlusselement 40 in einer vollständig geschlossenen Stellung positioniert ist, dargestellt. Dieser Bereich ist auch bei einem konventionellen Wärmetauschers mit U-förmiger Strömungsführung der höchsten Belastung infolge einer Thermowechselbeanspruchung ausgesetzt.

Ein konventioneller Wärmetauscher mit U-förmiger Strömungsführung ebenso wie ein im Rahmen eines erfindungsgemäßen Verfahrens verwendeter Wärmetauscher 38 umfasst einen Wärmetauscherblock 42, der aus einer Vielzahl von parallel ausgerichteten, zueinander beabstandeten Wärmetauscherrohren 44 (insbesondere Flachrohre) sowie zwischen den Wärmetauscherrohren 44 angeordneten und diese miteinander verbindenden Wellrippen 46 ausgebildet ist. Die einen Enden der Wärmetauscherrohre 44 münden in einen ersten Wärmetauscherkasten 48 und die anderen Enden in einen zweiten Wärmetauscherkasten 58. Der erste Wärmetauscherkasten 48 integriert einen Einlass 50 und einen Auslass 52 für das Kühlmittel. Bei einem konventionellen Wärmetauscher mit U-förmiger Strömungsführung ist der erste Wärmetauscherkasten in einem Abschnitt zwischen dem Einlass und dem Auslass mittels eines Trennstegs in zwei Teile unterteilt. Bei einem im Rahmen eines erfindungsgemäßen Verfahrens verwendbaren Wärmetauschers 38, wie er in den Fig. 4 bis 9 dargestellt ist, ist ein solcher Trennsteg 54 mit einer Durchgangsöffnung 56 versehen, die mittels eines beweglichen Verschlusselements 40 bedarfsweise (mehr oder weniger) verschließbar ist. Mit anderen Worten kann, anders als bei einem konventionellen Wärmetauscher mit U-förmiger Strömungsführung, ein Teil des Kühlmittels über die von dem Verschlusselement 40 freigegebene, mehr oder weniger große Durchgangsöffnung 56 strömen.

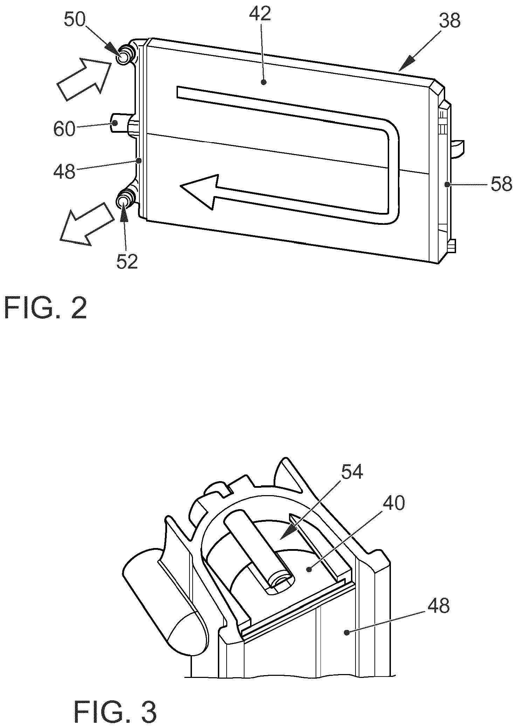

Bei einem konventionellen Wärmetauscher mit U-förmiger Strömungsführung ebenso wie bei dem in den Fig. 2 bis 9 dargestellten, im Rahmen eines erfindungsgemäßen Verfahrens verwendeten Wärmetauscher 38 ist grundsätzlich vorgesehen, dass das über den Einlass 50 in den ersten Wärmetauscherkasten 48 eintretende Kühlmittel in dem den Einlass 50 umfassenden Teil auf die darin endenden Wärmetauscherrohre 44 verteilt und in diesen Wärmetauscherrohren 44 in Richtung des zweiten Wärmetauscherkastens 58 strömt. In dem zweiten Wärmetauscherkasten 58 wird das Kühlmittel gesammelt und strömt vertikal nach unten. Dadurch gelangt es in die weiteren Wärmetauscherrohre 44, über die es in den den Auslass 52 umfassenden Teil des ersten Wärmetauscherkastens 48 zurückströmt (vgl. auch angedeutete Strömungsführung in der Fig. 2). Während der Durchströmung aller Wärmetauscherrohre 44 erfolgt bei ausreichender Temperaturdifferenz ein Wärmeübergang von dem Kühlmittel auf ein die Wärmetauscherrohre 44 in Querrichtung umströmendes und die Wellrippen durchströmendes Kühlmedium, hier Umgebungsluft, was zu dem vorgesehenen Abkühlen des Kühlmittels führt. Die die Wärmetauscherrohre 44 verbindenden Wellrippen 46 verbessern dabei in bekannter Weise den Wärmeübergang von dem Kühlmittel auf die Umgebungsluft.

Wie sich aus der Fig. 4 ergibt, befindet sich kurz nach einem Umschalten des Umschaltventils 28 für einen Betrieb des Kühlsystems in dem großen Kühlkreis in dem den Einlass 50 umfassenden Teil des ersten Wärmetauscherkastens 48 sowie in Anfangsabschnitten der in diesen Teil des ersten Wärmetauscherkastens 48 mündenden Wärmetauscherrohre 44 heißes Kühlmittel, während in dem den Auslass 52 umfassenden Abschnitt des ersten Wärmetauscherkastens 48 noch Kühlmittel mit niedrigerer Temperatur enthalten ist. Dies führt zu entsprechend stark ausgeprägten unterschiedlichen Wärmedehnungen des/der den Wärmetauschers ausbildenden Werkstoffs/-e im Bereich des geschlossenen Verschlusselements 40 (beziehungsweise dem Trennsteg bei einem konventionellen Wärmetauscher mit U-förmiger Strömungsführung), die zu Materialspannungen führen, die in Kombination mit der wechselnden Beanspruchung infolge einer regelmäßigen Aufheizung und Abkühlung des Kühlsystems bei einem Betrieb und einem Nichtbetrieb des Kraftfahrzeugs zu einem Bauteilversagen führen können. Betroffen können dabei insbesondere die in dem in der Fig. 4 mit einer Ellipse markierten Bereich positionierten Lötstellen sein.

Erfindungsgemäß ist vorgesehen, das Verschlusselement 40 für ein Umschalten des Kühlsystems von einem Betrieb in dem kleinen Kühlkreis auf einem Betrieb in dem großen Kühlkreis in verschiedenen Stellungen zu positionieren, um den Ort der höchsten Belastung durch die Thermowechselbeanspruchung entsprechend unterschiedlich zu positionieren, wodurch ermöglicht wird, die Lastwechselzahl der Thermowechselbeanspruchung, denen der Wärmetauscher ohne dadurch begründetes Materialversagen ausgesetzt werden kann, um ein Vielfaches gegenüber einem konventionellen Wärmetauscher mit U-förmiger Strömungsführung zu erhöhen, ohne dabei konstruktive Verstärkungsmaßnahmen vornehmen zu müssen und ohne dass die Temperatur des nach dem Umschalten des Umschaltventils in den Wärmetauscher einströmenden Kühlmittels reduziert werden müsste.

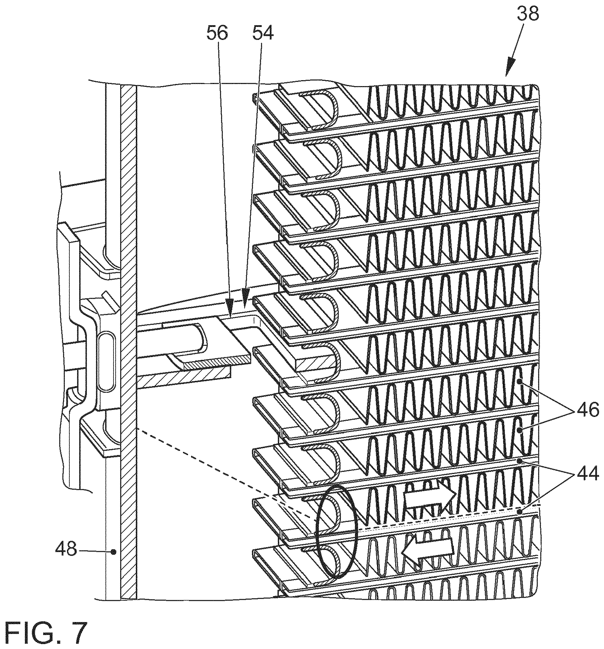

Die Fig. 7 verdeutlicht die dadurch erreichbare Verschiebung des Bereichs der höchsten Belastung infolge der Thermowechselbeanspruchung entlang der Längsrichtung des ersten Wärmetauscherkastens 48 in Richtung des Auslasses 52. Diese Wirkung ist darin begründet, dass das heiße Kühlmittel sich nunmehr nicht nur innerhalb des den Einlass 50 umfassenden Teils des ersten Wärmetauscherkastens 48 sondern sich auch in einer Menge, die von dem Grad des Verschlusses des ersten Wärmetauscherkastens 48 durch das Verschlusselement 44 abhängig ist, bis zumindest in den oberen Bereich des den Auslass 52 umfassenden Teils des ersten Wärmetauscherkastens 48 verteilen kann, was mit einer entsprechenden Verschiebung der Kalt-Heiß-Front zwischen den unterschiedlich temperierten Kühlmittelteilmengen verbunden ist. Hinzu kommt, dass sich das über die von dem Verschlusselement freigegebene Durchgangsöffnung in den den Auslass 52 umfassenden Teil des ersten Wärmetauscherkastens 48 überströmende heiße Kühlmittel mit dem dortigen kalten Kühlmittel vermischen kann, was zu der Ausbildung einer Mischzone führt, die infolge einer reduzierten mittleren Temperatur des darin enthaltenen Kühlmittels zu einer weiteren Reduzierung der Thermowechselbeanspruchung führt.

Durch das Vorsehen verschiedener Stellungen für das Verschlusselement 40 im Rahmen mehrerer Umschaltungen des Umschaltventils 28 von dem kleinen auf den großen Kühlkreis kann somit der Bereich der höchsten Belastung durch die damit einhergehende Thermowechselbeanspruchung entlang der Reihe der in den den Auslass 52 umfassenden Teil des ersten Wärmetauscherkastens 48 mündenden Wärmetauscherrohre 44 verschoben werden, was, da jeder dieser voneinander separierten Bereiche in etwa eine identische Lastwechselzahl zulässt, zu der bereits erwähnten Vervielfachung der Lebensdauer des Wärmetauschers 38 (hinsichtlich der Thermowechselfestigkeit) führt.

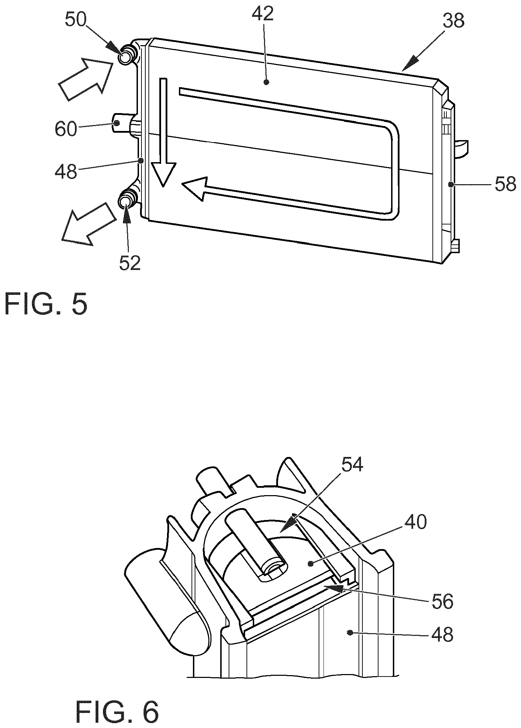

In den Fig. 5 und 6 ist dargestellt, dass bei einer nur geringfügig freigegebenen, die zwei Teile des ersten Wärmetauscherkastens 48 verbindenden Durchgangsöffnung 56 nur ein Teil des heißen Kühlmittels direkt, d.h. unter Umgehung der Wärmetauscherrohre 44, von dem den Einlass 50 umfassenden Teil in den den Auslass 52 umfassenden Teil des ersten Wärmetauscherkastens 48 überströmt, während der andere Teil des heißen Kühlmittels den Strömungspfad über die Wärmetauscherrohre 44 nimmt und dabei durch einen Wärmeübergang auf die Umgebungsluft abgekühlt wird.

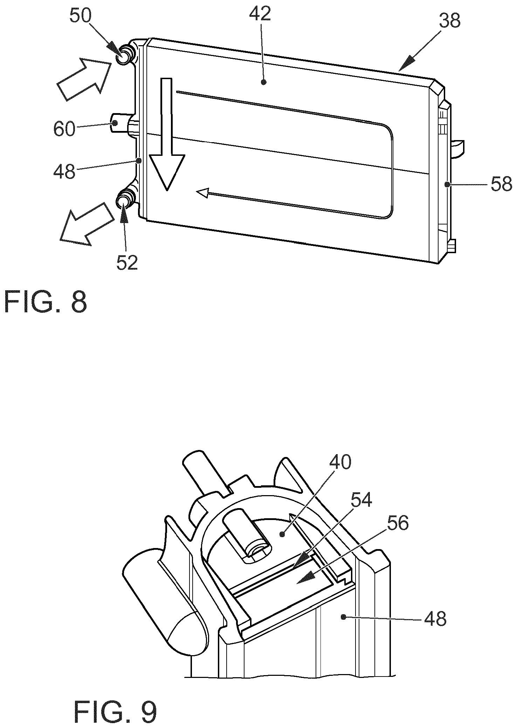

Die Fig. 8 und 9 zeigen dagegen eine Stellung des Verschlusselements 40, in der die Durchgangsöffnung 56 weitestmöglich freigegeben und der Grad des Verschlusses des ersten Wärmetauscherkastens 48 durch das Verschlusselement 40 somit minimal ist, wodurch der größte Teil des heißen Kühlmittels direkt von dem den Einlass 50 umfassenden Teil in den den Auslass 52 umfassenden Teil des ersten Wärmetauscherkastens 48 überströmt, während nur ein sehr geringer Teil davon den Strömungspfad über die Wärmetauscherrohre 44 nimmt. Im Vergleich zu der Positionierung gemäß der Fig. 7 wäre der Bereich der höchsten Belastung durch die Thermowechselbeanspruchung dabei noch weiter in Richtung des Auslasses 52 verschoben.

Selbstverständlich sind mehr als die drei in den Fig. 2 bis 9 dargestellten Stellungen für das Verschlusselement 40 möglich, wodurch eine noch gleichmäßigere Verteilung der Thermowechselbeanspruchung über der Länge des den Auslass 52 umfassenden Teils des ersten Wärmetauscherkastens 48 möglich wäre.

Ein Einstellen der verschiedenen Stellungen des Verschlusselements 40 kann mittels eines Aktors 60 realisiert werden, der hierzu von einer Steuerungsvorrichtung, insbesondere der Motorsteuerung 36 des Kraftfahrzeugs gemäß der Fig. 1, angesteuert werden kann. Der Aktor 60 kann dabei beispielsweise elektrisch, pneumatisch oder hydraulisch betätigbar sein.

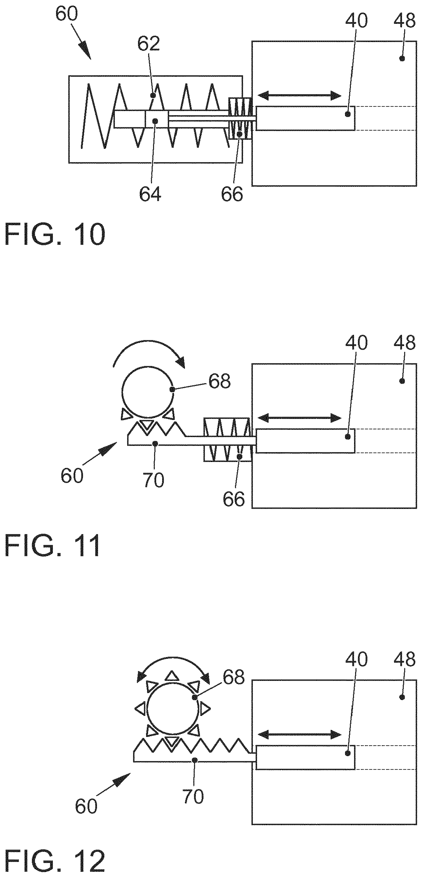

Die Fig. 10 bis 12 zeigen schematisch verschiedene Ausgestaltungen für ein ausschließlich linear bewegtes Verschlusselement 40. Gemäß der Fig. 10 kann beispielsweise vorgesehen sein, das Verschlusselement 40 in zumindest einer Bewegungsrichtung elektromagnetischen, beispielsweise durch einen mit dem Verschlusselement 40 verbundenen, innerhalb einer elektrischen Spule 62 beweglich geführten Anker 64 zu bewegen. Diese Bewegung kann mit einer zunehmenden Vorspannung eines Federelements 66 verbunden sein, das dann, wenn die elektrische Spule 62 nicht mehr mit elektrischer Spannung beaufschlagt wird, zu einer Rückstellung des Verschlusselements 40 führt. Durch eine Umpolung der elektrischen Spannung ist jedoch auch eine elektromagnetische Bewegung des Verschlusselements 40 in beide Bewegungsrichtungen möglich.

Die Fig. 11 verdeutlicht die Möglichkeit, das Verschlusselement 40 mittels eines elektromotorischen Antriebs in einer Bewegungsrichtung zu verstellen, während eine Rückstellung wiederum durch ein zuvor vorgespanntes Federelement 66 erfolgt. Um dabei zu ermöglichen, den Elektromotor lediglich in einer Drehrichtung antreiben zu können, kann vorgesehen sein, einen Eingriff zwischen einer Verzahnung eines von dem Elektromotor angetriebenen Ritzels 68 mit einer mit dem Verschlusselement 40 verbundenen Zahnstange 70 nur für einen Teilbereich der Umdrehung des Ritzels 68 vorzusehen.

Bei der Ausgestaltung gemäß der Fig. 12 ist dagegen eine vollumfängliche Verzahnung für das Ritzel 68 vorgesehen, was ermöglicht, durch eine Umkehrung der Drehrichtung des das Ritzel 68 antreibenden Elektromotors das Verschlusselement 40 mittels des Elektromotors in beide Bewegungsrichtungen zu bewegen. Dadurch kann auf ein zusätzliches Federelement 66 verzichtet werden. Ein solches kann jedoch zusätzlich vorgesehen sein, was insbesondere zur Realisierung einer sogenannten "failsafe"-Funktionalität sinnvoll sein kann, bei der das Verschlusselement 40 bei einem Ausfall des Aktors 60 in die weitestmöglich den ersten Wärmetauscherkasten 48 verschließende Stellung gebracht wird, um so im Betrieb des Kühlsystems eine Verringerung der Kühlleistung infolge von direkt von dem den Einlass 50 umfassenden Teil in den den Auslass 52 umfassenden Teil des ersten Wärmetauscherkastens 48 überströmendem Kühlmittel zu vermeiden. Grundsätzlich sollte daher vorgesehen sein, dass ein eine Bewegung des Verschlusselements 40 in zumindest einer Bewegungsrichtung bewirkendes oder unterstützendes Federelement 66 in Richtung einer zunehmend verschließenden Stellung des Verschlusselements 40 wirkt.

Anstelle eines Antriebs der Ritzel 68 mittels eines Elektromotors kann für diese auch ein Antrieb mittels beispielsweise eines Unterdruckkolbens (nicht dargestellt) oder eines Servomotors in Kombination mit einem Seilzug (nicht dargestellt) vorgesehen sein.

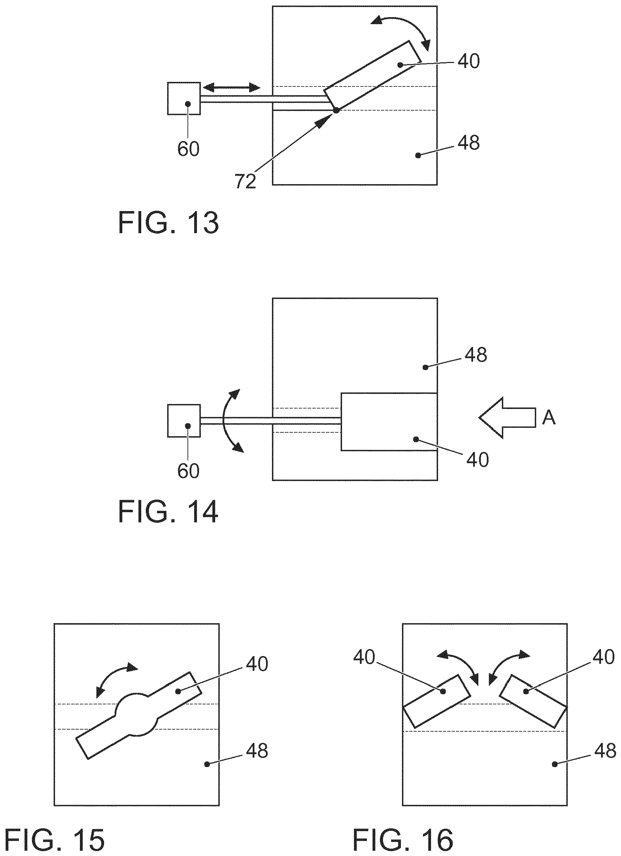

In den Fig. 13 bis 16 ist dargestellt, dass das Verschlusselement 40 auch durch eine Rotationsbewegung in verschiedene Stellungen bewegt werden kann. Dabei kann gemäß der Fig. 13 vorgesehen sein, die Drehbewegung durch einen linear wirkenden Aktor 60 (beispielsweise gemäß den Fig. 10 bis 12), der in einem Abstand von einem Drehgelenk 72 an dem Verschlusselement 40 angreift, zu bewirken. In den Ausgestaltungen gemäß den Fig. 14 bis 16 kommt dagegen ein rotierend wirkender Aktor 60 zum Einsatz, der ein einzelnes Verschlusselement 40 (vgl. Fig. 15) oder ein sich aus zwei Teilelementen zusammensetzendes Verschlusselement 40 gemäß der Fig. 16 rotierend bewegt.

### BEZUGSZEICHENLISTE

- 10: Brennkraftmaschine
- 12: Verbrennungsmotor
- 14: Motorölkühler
- 16: Getriebeölkühler
- 18: Hauptkühler
- 20: Heizungswärmetauscher
- 22: Innenraum des Kraftfahrzeugs
- 24: Kühlmittelpumpe
- 26: Gebläse
- 28: Umschaltventil
- 30: Bypassleitung
- 32: Auslass des Hauptkühlers
- 34: Auslass der Kühlmittelkanäle des Verbrennungsmotors
- 36: Motorsteuerung
- 38: Wärmetauscher
- 40: Verschlusselement
- 42: Wärmetauscherblock
- 44: Wärmetauscherrohr
- 46: Wellrippe
- 48: erster Wärmetauscherkasten
- 50: Einlass des ersten Wärmetauscherkastens
- 52: Auslass des ersten Wärmetauscherkastens
- 54: Trennsteg
- 56: Durchgangsöffnung
- 58: zweiter Wärmetauscherkasten
- 60: Aktor
- 62: elektrische Spule
- 64: Anker
- 66: Federelement
- 68: Ritzel
- 70: Zahnstange
- 72: Drehgelenk

## Patentansprüche

1. Verfahren zum Betreiben eines Kühlsystems, das einen einen Wärmetauscher (38) integrierenden großen Kühlkreis und einen den Wärmetauscher (38) ausschließenden kleinen Kühlkreis ausbildet, wobei der Wärmetauscher (38) eine Mehrzahl von Wärmetauscherrohren (44), die für eine Durchströmung mittels eines Kühlmittels und für eine Umströmung mittels eines Kühlmediums vorgesehen sind, und an die Wärmetauscherrohre (44) an deren Enden angeschlossene Wärmetauscherkästen (48, 58) umfasst, wobei für eine U-förmige Strömungsführung des Kühlmediums zumindest ein erster (48) der Wärmetauscherkästen einen Einlass (50) des Wärmetauschers (38) und einen Auslass (52) des Wärmetauschers (38) aufweist, und dieser erste Wärmetauscherkasten (48) zwischen dem Einlass (50) und dem Auslass (52) mittels eines Verschlusselements (40) variabel verschließbar ist, und wobei zum Umschalten von einem Betrieb des Kühlsystems in dem kleinen Kühlkreis auf einen Betrieb in dem großen Kühlkreis ein außerhalb des Wärmetauschers vorgesehenes Umschaltventil (28) betätigt wird, **dadurch gekennzeichnet, dass** für zumindest zwei aufeinanderfolgende Umschaltungen von dem kleinen Kühlkreis auf den großen Kühlkreis der Grad des Verschlusses des ersten Wärmetauscherkastens (48) durch Einstellen verschiedener Stellungen des Verschlusselements (40) verändert wird, indem für eine erste Umschaltung von dem kleinen Kühlkreis auf den großen Kühlkreis der Grad des Verschlusses des ersten Wärmetauscherkastens (48) durch Einstellen einer ersten Stellung des Verschlusselements (40) auf einen ersten Wert eingestellt wird und für eine auf die erste Umschaltung folgende zweite Umschaltung von dem kleinen Kühlkreis auf den großen Kühlkreis der Grad des Verschlusses des ersten Wärmetauscherkastens (48) durch Einstellen einer zweiten Stellung des Verschlusselements (40), die sich von der ersten Stellung unterscheidet, auf einen zweiten Wert, der sich von dem ersten Wert unterscheidet, eingestellt wird.

2. Verfahren gemäß Anspruch 1, **dadurch gekennzeichnet, dass** nach einer definierten Phase eines Betriebs des Kühlsystems in dem großen Kühlkreis der erste Wärmetauscherkasten (48) mittels des Verschlusselements weitestgehend verschlossen wird.

3. Verfahren gemäß Anspruch 1 oder 2, **dadurch gekennzeichnet, dass** das Verschlusselement (40) in mehr als zwei Stellungen verstellbar ist.

4. Verfahren gemäß einem der Ansprüche 1 bis 3, **dadurch gekennzeichnet, dass** der Grad des Verschlusses des ersten Wärmetauscherkastens (48) für jede Umschaltung von dem kleinen Kühlkreis auf den großen Kühlkreis verändert wird.

5. Verfahren gemäß einem der Ansprüche 1 bis 3, **dadurch gekennzeichnet, dass** der Grad des Verschlusses des ersten Wärmetauscherkastens (48) jeweils nach einer definierten Anzahl an Umschaltungen von dem kleinen Kühlkreis auf den großen Kühlkreis verändert wird.

6. Verfahren gemäß einem der Ansprüche 1 bis 3, **dadurch gekennzeichnet, dass** der Grad des Verschlusses des ersten Wärmetauscherkastens (48) jeweils nach einer definierten Betriebsdauer des Kühlsystems verändert wird.

7. Verfahren gemäß einem der vorhergehenden Ansprüche, **dadurch gekennzeichnet, dass** die für das Umschalten von dem kleinen Kühlkreis auf den großen Kühlkreis eingestellten verschiedenen Stellungen des Verschlusselements gleich häufig eingestellt werden.

8. Verfahren gemäß einem der vorhergehenden Ansprüche, **dadurch gekennzeichnet, dass** der Grad des Verschlusses des ersten Wärmetauscherkastens (48) durch Einstellen verschiedener Stellungen für das Verschlusselement (48) nur verändert wird, wenn die Temperatur des bereits in dem Wärmetauscher (38) befindlichen Kühlmittels unterhalb eines Grenzwerts und/oder die Temperatur und/oder der Volumenstrom des in den ersten Wärmetauscherkasten (48) einströmenden Kühlmittels oberhalb eines Grenzwerts liegt.

9. Verfahren gemäß Anspruch 8, **dadurch gekennzeichnet, dass** der erste Wärmetauscherkasten (48) mittels des Verschlusselements (40) weitestgehend verschlossen gehalten wird, wenn die Temperatur des bereits in dem Wärmetauscher (38) befindlichen Kühlmittels oberhalb des entsprechenden Grenzwerts und/oder die Temperatur und/oder der Volumenstrom des in den ersten Wärmetauscherkasten (48) einströmenden Kühlmittels unterhalb des entsprechenden Grenzwerts liegt.

## Claims

1. Method for operating a cooling system which forms a large cooling circuit, in which a heat exchanger (38) is integrated, and a small cooling circuit, in which the heat exchanger (38) is excluded, wherein the heat exchanger (38) comprises a plurality of heat-exchanger tubes (44), which are intended for being flowed through by means of a coolant and for being flowed around by means of a cooling medium, and heat-exchanger boxes (48, 58), which are connected to the heat-exchanger tubes (44) at the ends thereof, wherein, for U-shaped flow guidance of the cooling medium, at least a first one (48) of the heat-exchanger boxes has an inlet (50) of the heat exchanger (38) and an outlet (52) of the heat exchanger (38), and this first heat-exchanger box (48) is able to be closed to a variable extent between the inlet (50) and the outlet (52) by means of a closure element (40), and wherein a switching valve (28) provided outside the heat exchanger is actuated for switching from an operation of the cooling system in the small cooling circuit to an operation in the large cooling circuit, **characterized in that**, for at least two successive switches from the small cooling circuit to the large cooling circuit, the degree of closure of the first heat-exchanger box (48) is changed by setting different positions of the closure element (40) **in that**, for a first switch from the small cooling circuit to the large cooling circuit, the degree of closure of the first heat-exchanger box (48) is set to a first value by setting a first position of the closure element (40) and, for a second switch, following the first switch, from the small cooling circuit to the large cooling circuit, the degree of closure of the first heat-exchanger box (48) is set to a second value, which is different from the first value, by setting a second position of the closure element (40), which is different from the first position.

2. Method according to Claim 1, **characterized in that**, after a defined phase of an operation of the cooling circuit in the large circuit, the first heat-exchanger box (48) is substantially closed by means of the closure element.

3. Method according to Claim 1 or 2, **characterized in that** the closure element (40) is adjustable into more than two positions.

4. Method according to one of Claims 1 to 3, **characterized in that** the degree of closure of the first heat-exchanger box (48) is changed for each switch from the small cooling circuit to the large cooling circuit.

5. Method according to one of Claims 1 to 3, **characterized in that** the degree of closure of the first heat-exchanger box (48) is changed in each case after a defined number of switches from the small cooling circuit to the large cooling circuit.

6. Method according to one of Claims 1 to 3, **characterized in that** the degree of closure of the first heat-exchanger box (48) is changed in each case after a defined operating duration of the cooling system.

7. Method according to one of the preceding claims, **characterized in that** the different positions of the closure element set for the switching from the small circuit to the large circuit are set equally frequently.

8. Method according to one of the preceding claims, **characterized in that** the degree of closure of the first heat-exchanger box (48) is changed, by setting different positions for the closure element (48), only if the temperature of the coolant already situated in the heat exchanger (38) is below a limit value and/or the temperature and/or the volumetric flow rate of the coolant flowing into the first heat-exchanger box (48) is above a limit value.

9. Method according to Claim 8, **characterized in that** the first heat-exchanger box (48) is kept substantially closed, by means of the closure element (40), if the temperature of the coolant already situated in the heat exchanger (38) is above the corresponding limit value and/or the temperature and/or the volumetric flow rate of the coolant flowing into the first heat-exchanger box (48) is below the corresponding limit value.

## Revendications

1. Procédé de fonctionnement d'un système de refroidissement qui forme un grand circuit de refroidissement intégrant un échangeur de chaleur (38) et un petit circuit de refroidissement excluant l'échangeur de chaleur (38), l'échangeur de chaleur (38) comprenant une pluralité de tubes d'échangeur de chaleur (44) qui sont prévus pour être traversés par un agent réfrigérant et pour qu'un fluide de refroidissement s'écoule autour de ceux-ci, et des boîtiers d'échangeur de chaleur (48, 58) raccordés aux tubes d'échangeur de chaleur (44) à leurs extrémités, au moins un premier (48) des boîtiers d'échangeur de chaleur présentant une entrée (50) de l'échangeur de chaleur (38) et une sortie (52) de l'échangeur de chaleur (38) pour un guidage d'écoulement en forme de U du fluide de refroidissement, et ce premier boîtier d'échangeur de chaleur (48) pouvant être fermé de manière variable à l'aide d'un élément de fermeture (40) entre l'entrée (50) et la sortie (52), et, pour la commutation d'un fonctionnement du système de refroidissement dans le petit circuit de refroidissement à un fonctionnement dans le grand circuit de refroidissement, une soupape de commutation (28) prévue à l'extérieur de l'échangeur de chaleur étant actionnée, **caractérisé en ce que** le degré de la fermeture du premier boîtier d'échangeur de chaleur (48) est modifié par réglage de différentes positions de l'élément de fermeture (40) pour au moins deux commutations successives du petit circuit de refroidissement au grand circuit de refroidissement, par le fait que, pour une première commutation du petit circuit de refroidissement au grand circuit de refroidissement, le degré de la fermeture du premier boîtier d'échangeur de chaleur (48) est réglé à une première valeur par réglage d'une première position de l'élément de fermeture (40) et le degré de la fermeture du premier boîtier d'échangeur de chaleur (48) est réglé à une deuxième valeur qui est différente de la première valeur par réglage d'une deuxième position de l'élément de fermeture (40), laquelle est différente de la première position, pour une deuxième commutation, subséquente à la première commutation, du petit circuit de refroidissement au grand circuit de refroidissement.

2. Procédé selon la revendication 1, **caractérisé en ce qu'**après une phase définie d'un fonctionnement du système de refroidissement dans le grand circuit de refroidissement, le premier boîtier d'échangeur de chaleur (48) est fermé dans une très large mesure à l'aide de l'élément de fermeture.

3. Procédé selon la revendication 1 ou 2, **caractérisé en ce que** l'élément de fermeture (40) est déplaçable dans plus de deux positions.

4. Procédé selon l'une des revendications 1 à 3, **caractérisé en ce que** le degré de la fermeture du premier boîtier d'échangeur de chaleur (48) est modifié pour chaque commutation du petit circuit de refroidissement au grand circuit de refroidissement.

5. Procédé selon l'une des revendications 1 à 3, **caractérisé en ce que** le degré de la fermeture du premier boîtier d'échangeur de chaleur (48) est modifié respectivement après un nombre défini de commutations du petit circuit de refroidissement au grand circuit de refroidissement.

6. Procédé selon l'une des revendications 1 à 3, **caractérisé en ce que** le degré de la fermeture du premier boîtier d'échangeur de chaleur (48) est modifié respectivement après une durée de fonctionnement définie du système de refroidissement.

7. Procédé selon l'une des revendications précédentes, **caractérisé en ce que** les différentes positions de l'élément de fermeture, réglées pour la commutation du petit circuit de refroidissement au grand circuit de refroidissement, sont réglées souvent de la même manière.

8. Procédé selon l'une des revendications précédentes, **caractérisé en ce que** le degré de la fermeture du premier boîtier d'échangeur de chaleur (48) par réglage de différentes positions de l'élément de fermeture (48) n'est modifié que lorsque la température de l'agent de refroidissement se trouvant déjà dans l'échangeur de chaleur (38) se situe en dessous d'une valeur limite et/ou la température et/ou le flux volumique de l'agent de refroidissement s'écoulant dans le premier boîtier d'échangeur de chaleur (48) se situent au-dessus d'une valeur limite.

9. Procédé selon la revendication 8, **caractérisé en ce que** le premier boîtier d'échangeur de chaleur (48) est maintenu fermé dans une très large mesure à l'aide de l'élément de fermeture (40), lorsque la température de l'agent de refroidissement se trouvant déjà dans l'échangeur de chaleur (38) se situe au-dessus de la valeur limite correspondante et/ou la température et/ou le flux volumique de l'agent de refroidissement s'écoulant dans le premier boîtier d'échangeur de chaleur (48) se situent en dessous de la valeur limite correspondante.
